# EUROPEAN PATENT APPLICATION

(11) **EP 1 067 458 A1**
(43) Date of publication of application: **10.01.2001**
(21) Application number: 00102043.7
(22) Date of filing: 02.02.2000
(51) Int. Cl.: G06F 11/36

(54) **Running and testing applications**

(30) Priority: 09.07.1999 EP 99401746
(71) Applicant: CANAL+ Société Anonyme, 75711 Paris Cedex 15 (FR)
(72) Inventor: Beuque, Jean-Bernard Gerard Maurice, 92270 Bois-Colombes (FR); Liao, Hongtao, 78180 Montigny le Bretonneux (FR); Boudokhane, Mahmoud, Canal+ Technologies S.A., 75516 Paris Cedex 15 (FR); Vincent, Didier, Canal+ Technologies S.A., 75516 Paris Cedex 15 (FR)
(74) Representative: Cozens, Paul Dennis

(57) **Abstract**

A receiver/decoder for testing an application, for example, for an analogue or a digital television system, is disclosed, the receiver/decoder comprising means for exchanging messages with a network, and means for running the application in dependence on a message received from the network. The receiver/decoder may be used for debugging the application. An associated workstation, and an application development tool for editing and testing applications, are also disclosed. Also disclosed is a method of transferring an application from a workstation to a receiver/decoder, and methods of running an application on a receiver/decoder.

## Description

The invention relates to a receiver/decoder (for example, for an analogue or a digital television system), a workstation and an authoring tool, and to a method of transferring an application to a receiver/decoder and to methods of running an application on a receiver/decoder.

The invention has particular application in the context of developing, testing and debugging applications for receiver/decoders, although it may also be used, for example, for demonstrating such applications.

In the case of digital television systems, these transmit television channels to the viewer in digital, rather than analogue, form. The digital channels are encoded into a digital data stream at the transmitter end, and are decoded at the receiver end using a digital decoder, which may be either in a digital set-top box (DSTB) or in an integrated digital television. To allow interactivity, an uplink may be provided, either via the same medium that delivers the television channels, or else via a different medium such as a telephone link. As used herein, the term "digital television system" includes for example any satellite, terrestrial, cable and other system.

Digital decoders typically contain a processor on which programs known as applications may be run. Examples of such applications include program guides, tele-shopping, quizzes, home-banking and tele-voting. Such applications typically display a menu on the television screen from which the user may select a particular option. The data used in the application may be transmitted to the decoder in the same data stream as the television channels. The result of the selection can be directly interpreted by the application running on the decoder or it can be transmitted via the uplink to allow the appropriate action to be taken.

Applications may be permanently resident in the DSTB or integrated digital television, or they may be downloaded via the digital medium as and when required. To run applications, the decoder has a run time environment such as a virtual machine (VM) to run, for example, Java applications.

With the rapidly increasing number of services that are being provided to the user, there is a demand for application development tools, which can allow applications to be designed, created, debugged and tested. An example of such an application tool is *Media*highwayApplication Workshop, supplied by *CANAL*+.

Known application development tools typically allow applications to be developed on a workstation, such as a PC or UNIX workstation. When the application is ready for testing, it is downloaded to a digital decoder such as a DSTB.

As disclosed in International Patent Application Number WO 98/43165 in the name of the present applicant, the subject matter of which is incorporated herein by reference, a workstation coupled to a receiver/decoder type unit may be provided for debugging applications. In order to debug the application, it is downloaded in its entirety to the receiver/decoder using a link. A debugger on the workstation is then used to monitor and/or to control operation of the application, using two further links for passing control signals to and from the receiver/decoder.

According to one aspect of the present invention there is provided a receiver/decoder operable in a debugging mode for debugging an application, comprising means for communicating a debugging message over a network.

Hitherto, such an arrangement had not been considered, principally due to the extra complexity involved in providing the receiver/decoder with networking capabilities, in comparison to a simple one-to-one link. However, it has now been appreciated pursuant to the present invention that, in the context of testing and/or debugging applications, various advantages may result from providing a receiver/decoder with network capabilities.

By providing the receiver/decoder with means for communication debugging messages over a network, the receiver/decoder can become part of an application developer's environment, so that, for example, files, control signals or information signals can be exchanged between the receiver/decoder and a workstation while testing an application. This can allow more flexibility in the testing of applications than was previously the case.

Furthermore, resources may be shared between the receiver/decoder, the workstation, and other devices connected to the network. For example, the receiver/decoder may have direct access to an external storage device, such as a hard disk in the workstation, via the network.

Due to the provision of networking capabilities, the receiver/decoder may be physically remote from the workstation while the application is being debugged. The network may provide for amplification of signals, so that the receiver/decoder may be separated by greater distances than would otherwise be possible.

The term "debugging" as used herein preferably implies that the application is controlled and/or monitored to enable errors, or "bugs", in the application to be identified. Debugging messages preferably include control and/or monitoring messages for debugging the application, which messages may be received or transmitted by the receiver/decoder. For example, the receiver/decoder may receive a command instructing it to send certain information about the status of the application or the receiver/decoder, and both the command and the information are termed debugging messages. In this way, debugging functions such as monitoring variables, starting and stopping execution, trace function, monitoring status of the receiver/decoder, and other debugging functions may be implemented.

The term "network" preferably implies that devices are assigned address. This preferably provides the ability to have more than two devices in a logical network, the devices being distinguished by means of addresses. This is distinct from, for example, a simple serial link between two devices. Preferably the network has a protocol which enables the receiver/decoder to access files on a remote storage device, such as the hard disk of a workstation. Preferably the network transmits signals in the form of packets of data having a destination address. Preferably, the receiver/decoder includes means for storing the address (or identifier) of the receiver/decoder.

Where the application comprises a plurality of files, the receiver/decoder may comprise means for selectively reading at least one of the files from an external storage means, although a receiver/decoder without such means may also be provided.

The means for communicating a debugging message may be adapted to receive the debugging message from the network, preferably to control the execution of the application in dependence on the message. An operator at a remote location (such as a workstation) can thereby control execution of the application.

Preferably, the debugging mode is invoked by the debugging message, which message includes an identifier of a remote host, and the means for communicating a debugging message is adapted to communicate a further debugging message with the remote host identified in the message.

The means for communicating the debugging message may also or alternatively be adapted to transmit a debugging message to the network, the message preferably containing information concerning execution of the application. An operator at a remote location can thereby monitor execution of the application.

The receiver/decoder preferably includes means for running the application, which means may be runtime means such as a processor, a virtual machine, a runtime engine, or another suitable runtime means or environment.

In another aspect of the invention there is provided a receiver/decoder comprising a processor programed to operate in a debugging mode for debugging an application, and an interface (such as an input/output port) for communicating a debugging message over a network. It will be appreciated that the receiver/decoder may include intermediate means, such as a virtual machine, between the processor and the application.

In another aspect of the invention there is provided a workstation adapted to debug an application running on a receiver/decoder, comprising means for communicating a debugging message with the receiver/decoder over a network, preferably to control and/or to monitor execution of the application on the receiver/decoder.

The invention also provides an application development tool comprising a receiver/decoder in any of the forms described above and a workstation in any of the forms described above. The application development tool may include a net proxy operative to implement communication between the receiver/decoder and the workstation.

The invention also provides an application development environment comprising an application development tool as described above and a network over which the workstation and the receiver/decoder exchange messages.

In a method aspect of the present invention there is provided a method of debugging an application on a receiver/decoder comprising operating the receiver/decoder in a debugging mode and communicating a debugging message over a network.

The receiver/decoder may receive a debugging message from the network, preferably to control the execution of the application in dependence on the message. The method may further comprise invoking the debugging mode by the debugging message, which message includes an identifier of a remote host, and communicating a further debugging message with the remote host identified in the message.

The method may also or alternatively comprising transmitting a debugging message to the network, the message preferably containing information concerning execution of the application.

A problem in the prior art which has been identified pursuant to the present invention, is that, if any changes are required to be made to the application as a result of testing on the receiver/decoder, the appropriate changes must be made in the application development tool, the application re-compiled as resident, and then the entire resident application and the virtual machine downloaded to the decoder, which process may be time consuming and cumbersome.

According to another aspect of the present invention, which may be provided either independently or in dependence on the receiver/decoder in any of the forms described above, there is provided a receiver/decoder comprising means for running an application, the application comprising a plurality of files, and means for selectively reading at least one of the files from the network.

The invention also provides a receiver/decoder comprising means for running an application, the application comprising a plurality of files, and means for selectively reading at least one of the files from an external storage means. Preferably the external storage means is connected to the network and the receiver/decoder comprises means for selectively reading the at least one of the files from the network.

By providing a receiver/decoder which can selectively read a file from the network, parts of the application may be read by the receiver/decoder, for example following a modification of some of the parts.

In any aspect, the means for running an application may be runtime means such as a processor, a virtual machine, a runtime engine, or another suitable runtime means or environment, and the means for reading at least one of the files from the network or external storage means may be an input/output port and associated drivers. The external storage means may be the hard disk of a computer or a network file store, or any other storage medium.

The term "receiver/decoder" used herein may connote a receiver for receiving either encoded or non-encoded signals, for example, television and/or radio signals, which may be broadcast or transmitted by some other means. The term may also connote a decoder for decoding received signals. Embodiments of such receiver/decoders may include a decoder integral with the receiver for decoding the received signals, for example, in a "set-top box", such a decoder functioning in combination with a physically separate receiver, or such a decoder including additional functions, such as a web browser, a video recorder, or a television. As used herein, the term "receiver/decoder" also includes a receiver/decoder-type unit which may be used for testing and/or debugging applications.

Preferably the receiver/decoder is adapted to receiver a message which includes an identifier of the location where the files are stored. Preferably the receiver/decoder is adapted to read an individual file from the network or external storage means, so that no more data than necessary is transferred.

The application may contain some files which are not always required to run the application, and thus rather than downloading the whole of the application at one time, the receiver/decoder is preferably adapted to read said at least one file as it is required to run the application.

The receiver/decoder may be adapted to read updated files, so that if files are modified, the receiver/decoder will be updated with the modified files.

The external storage means may be part of a workstation, for example, a workstation which is used to edit applications. The external storage means may also be a file store mounted on a network. In order to compensate for the fact that the receiver/decoder may not have a network stack, the receiver/decoder may be adapted to use as its network stack a simulated network stack on the workstation. Alternatively, the receiver/decoder may be provided with a network stack.

In order to initiate the application, the receiver/decoder is preferably adapted to load a boot file from the external storage means.

According to another aspect of the present invention, which may be provided either independently or in dependence on the workstation in any of the forms described above, there is provided a workstation comprising storage means (such as a hard disk or other storage medium) storing an application to be run on a receiver/decoder, the application comprising a plurality of files, and means (such as an input/output port and associated drivers) for allowing access to at least one of the files by a receiver/decoder connected to the workstation by a network.

According to another aspect of the present invention there is provided a workstation comprising storage means (such as a hard disk or other storage medium) for storing an application, the application comprising a plurality of files, and means (such as an input/output port and associated drivers) for allowing access to at least one of the files by a receiver/decoder.

The means for allowing access to said at least one file may be adapted to allow an individual file to be read. The workstation may further comprise means for editing the application.

According to another aspect of the invention, which may be provided either independently or in dependence on the application development tool in any of the forms described above, there is provided an application development tool comprising a workstation for editing an application and a receiver/decoder for running the application, wherein the receiver/decoder has means for selectively reading at least a part of the application from a network file store and the workstation has means for initiating communication of the or each part to the receiver/decoder.

According to another aspect of the present invention there is provided an application development tool comprising a workstation for editing an application and a receiver/decoder for running the application, wherein the receiver/decoder has means for selectively reading at least a part of the application from the workstation and the workstation has means for communicating the or each part to the receiver/decoder. The workstation may further comprise storage-means, such as a hard disk or other storage medium, for storing the application.

In the above aspects, the application may comprise a plurality of files. The receiver/decoder may be adapted to read an individual file from the storage means. The receiver/decoder may be adapted to read a file as it is required to run the application. The editing tool may be adapted to update a file and the receiver/decoder may be adapted to read said file once updated.

In order to ensure that updated files are used by the receiver/decoder, the receiver/decoder may be adapted to read the most recent version of a file. Additionally or alternatively, the workstation may be adapted to instruct the receiver/decoder to discard a file, for example an old version of a file that has been updated, so that when the receiver/decoder next needs that file, the updated file will be read from the workstation.

The application development tool may further include a net proxy operative to implement communication between the receiver/decoder and a network. Moreover, the workstation is typically also connected to the network.

In preferred embodiments of an application development tool, the workstation further comprises a debugger operable to control and/or monitor execution of the application on the receiver/decoder. The debugger and the application may exchange control signals over a network. In particular, the files and the control signals may be carried on the same network.

According to a method aspect of the present invention there is provided a method of transferring an application from a workstation to a receiver/decoder, the application comprising a plurality of files, comprising transferring (typically over a network) an individual file from the workstation to the receiver/decoder. The file may be transferred only when it is required to run the application. The method may further comprise updating a file and transferring the updated file to the receiver/decoder.

According to another method aspect there is provided a method of running an application on a receiver/decoder, the application comprising a plurality of files, comprising transferring files to the receiver/decoder as they are required to run the application.

According to another method aspect there is provided a method of running an application on a receiver/decoder, the application comprising a boot file, comprising:
transferring (optionally over a network) a boot file to the receiver/decoder; and
executing the boot file in the receiver/decoder.

In some circumstances the boot file may contain the whole application, and thus only the boot file need be transferred. However, the application may contain the boot file and at least one further file. Thus, according to a further method aspect there is provided a method of running an application on a receiver/decoder, the application comprising a boot file and at least one further file, comprising:
transferring (optionally over a network) a boot file to the receiver/decoder;
executing the boot file in the receiver/decoder; and
transferring (optionally over a network) the at least one further file when it is required.

In either of the last two aspects of the invention, at least one of the boot file and the at least one other file may be transferred from a network file store.

From a further aspect, the invention provides a receiver/decoder comprising runtime means (e.g. a runtime environment, a processor, or a virtual machine, amongst other possibilities) in which the runtime means is operative to receive signals from a remote workstation over a network, which signals control execution of an application by the receiver/decoder.

Moreover, the invention further provides a receiver/decoder, optionally according to the last-preceding paragraph, comprising runtime means (e.g. a runtime environment, a processor, or a virtual machine, amongst other possibilities) in which the runtime means is operative to send signals to a remote workstation over a network, which signals contain information relating to execution of an application by the receiver/decoder.

A receiver/decoder according to either of the two last-preceding paragraphs may be operable in a debugging mode, in which signals sent to and/or received from a remote workstation control and/or monitor execution of an application by the runtime means.

Another aspect of the invention provides a method of operating a receiver/decoder in which a control signals for controlling and/or monitoring operation of the receiver/decoder are sent between the receiver/decoder and a remote workstation over a network.

The invention also provides a computer readable medium having stored thereon a program for carrying out any of the methods described above, and a computer program product comprising a program for carrying out any of the methods described above.

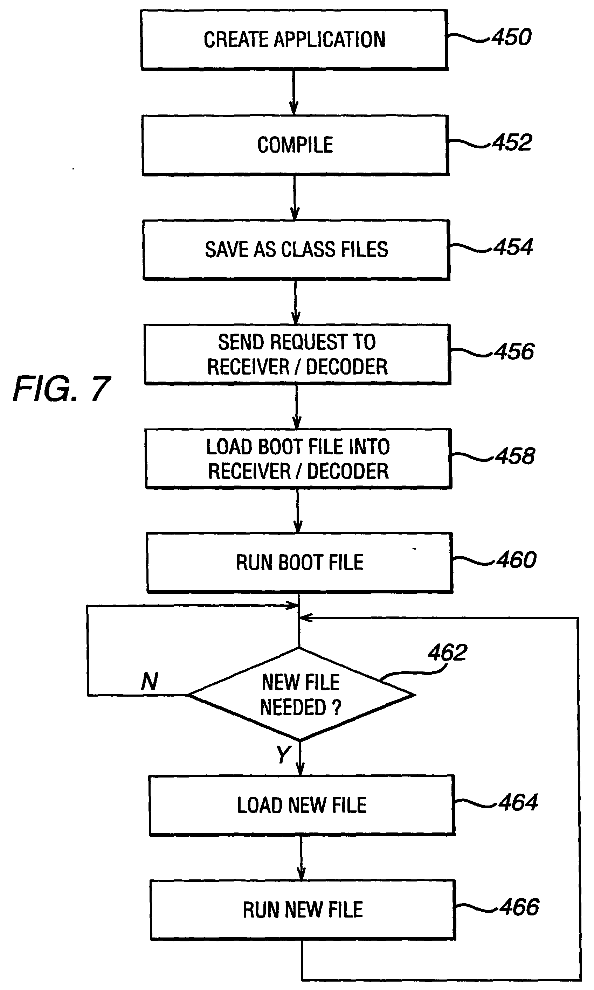

The invention also provides apparatus substantially as described with reference to and as illustrated in the accompanying drawings, and a method substantially as described with reference to Figure 7 of the accompanying drawings.

Features of one aspect may be applied to other aspects; apparatus features may be applied to the method aspects and *vice versa*.

Preferred features of the present invention will now be described, purely by way of example, with reference to the accompanying drawings, in which:-
Figure 1 shows the architecture of a typical digital television system;
Figure 2 shows the architecture of an interactive system of the digital television system of Figure 1;
Figure 3 is a schematic diagram of the structure of a receiver/decoder of the system of Figure 1;
Figure 4 is a functional block diagram of the layered architecture of the receiver/decoder;
Figure 5 shows an overview of an authoring tool;
Figure 6 shows the main components of the authoring tool of Figure 5;
Figure 7 shows the operation of the authoring tool of Figure 5; and
Figure 8 shows the architecture of input/output layers of the authoring tool of Figure 5;
Figure 9 is a diagram illustrating a network data frame; and
Figure 10 is a functional diagram of another embodiment of the invention.

### Overview of a digital television system

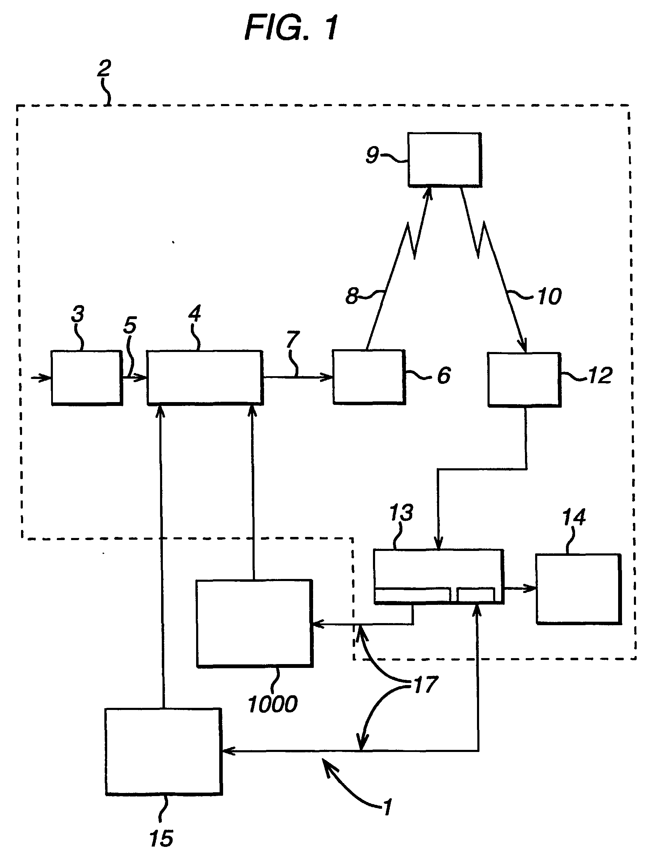

An overview of a digital television system 1 is shown in Figure 1. The invention includes a mostly conventional digital television system 2 that uses the known MPEG-2 compression system to transmit compressed digital signals. In more detail, MPEG-2 compressor 3 in a broadcast centre receives a digital signal stream (typically a stream of video signals). The compressor 3 is connected to a multiplexer and scrambler 4 by linkage 5.

The multiplexer 4 receives a plurality of further input signals, assembles the transport stream and transmits compressed digital signals to a transmitter 6 of the broadcast centre via linkage 7, which can of course take a wide variety of forms including telecommunications links. The transmitter 6 transmits electromagnetic signals via uplink 8 towards a satellite transponder 9, where they are electronically processed and broadcast via notional downlink 10 to earth receiver 12, conventionally in the form of a dish owned or rented by the end user. Other transport channels for transmission of the data are of course possible, such as terrestrial broadcast, cable transmission, combined satellite/cable links, telephone networks etc.

The signals received by receiver 12 are transmitted to an integrated receiver/decoder 13 owned or rented by the end user and connected to the end user's television set 14. The receiver/decoder 13 decodes the compressed MPEG-2 signal into a television signal for the television set 14. Although a separate receiver/decoder is shown in Figure 1, the receiver/decoder may also be part of an integrated digital television. As used herein, the term "receiver/decoder" includes a separate receiver/decoder, such as a set-top box, and a television having a receiver/decoder integrated therewith.

In a multichannel system, the multiplexer 4 handles audio and video information received from a number of parallel sources and interacts with the transmitter 6 to broadcast the information along a corresponding number of channels. In addition to audiovisual information, messages or applications or any other sort of digital data may be introduced in some or all of these channels interlaced with the transmitted digital audio and video information.

A conditional access system 15 is connected to the multiplexer 4 and the receiver/decoder 13, and is located partly in the broadcast centre and partly in the decoder. It enables the end user to access digital television broadcasts from one or more broadcast suppliers. A smartcard, capable of deciphering messages relating to commercial offers (that is, one or several television programmes sold by the broadcast supplier), can be inserted into the receiver/decoder 13. Using the decoder 13 and smartcard, the end user may purchase commercial offers in either a subscription mode or a pay-per-view mode. As used herein, the term "smartcard" includes, but not exclusively so, any chip-based card device, or object of similar function and performance, possessing, for example, microprocessor and/or memory storage. Included in this term are devices having alternative physical forms to a card, for example key-shaped devices such as are often used in TV decoder systems.

As mentioned above, programmes transmitted by the system are scrambled at the multiplexer 4, the conditions and encryption keys applied to a given transmission being determined by the access control system 15. Transmission of scrambled data in this way is well known in the field of pay TV systems. Typically, scrambled data is transmitted together with a control word for descrambling of the data, the control word itself being encrypted by a so-called exploitation key and transmitted in encrypted form.

The scrambled data and encrypted control word are then received by the decoder 13 having access to an equivalent to the exploitation key stored on a smart card inserted in the decoder to decrypt the encrypted control word and thereafter descramble the transmitted data. A paid-up subscriber will receive, for example, in a broadcast monthly ECM (Entitlement Control Message) the exploitation key necessary to decrypt the encrypted control word so as to permit viewing of the transmission.

An interactive system 16, also connected to the multiplexer 4 and the receiver/decoder 13 and again located partly in the broadcast centre-and partly in the decoder, enables the end user to interact with various applications via a modemmed back channel 17. The modemmed back channel may also be used for communications used in the conditional access system 15. An interactive system may be used, for example, to enable the viewer to communicate immediately with the transmission centre to demand authorisation to watch a particular event, to download an application etc.

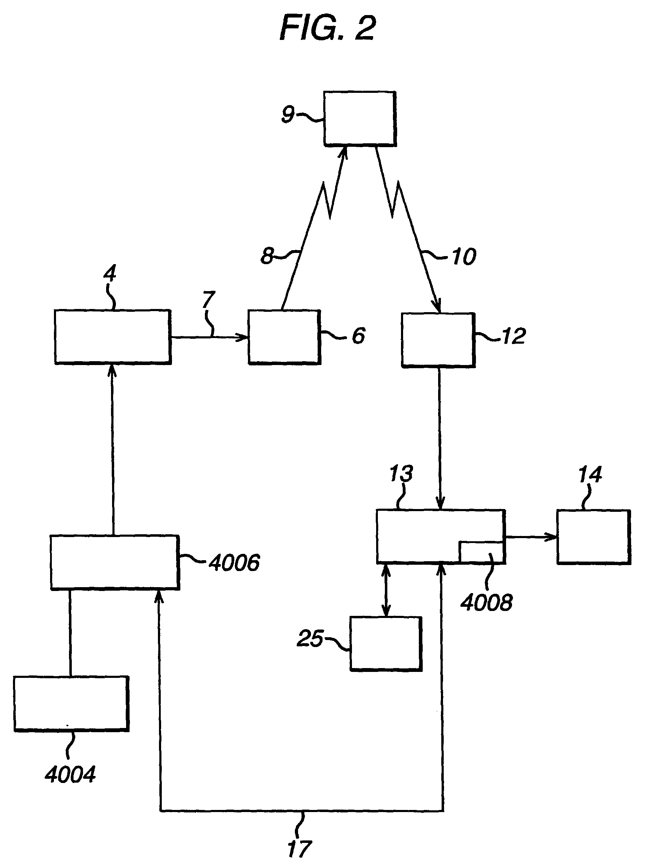

Figure 2 shows the general architecture of the interactive television system 16 of the digital television system 1 of the present invention.

For example, the interacting system 16 allows an end user to buy items from on-screen catalogues, consult local news and weather maps on demand and play games through their television set.

The interactive system 4000 comprises in overview four main elements:-
- an authoring tool 4004 at the broadcast centre or elsewhere for enabling a broadcast supplier to create, develop, debug and test applications;
- an application and data server 4006, at the broadcast centre, connected to the authoring tool 4004 for enabling a broadcast supplier to prepare, authenticate and format applications and data for delivery to the multiplexer and scrambler 4 for insertion into the MPEG-2 transport stream (typically the private section thereof) to be broadcast to the end user;
- a virtual machine including a run time engine (RTE) 4008, which is an executable code installed in the receiver/decoder 13 owned or rented by the end user for enabling an end user to receive, authenticate, decompress, and load applications into the working memory of the decoder 13 for execution. The engine 4008 also runs resident, general-purpose applications. The engine 4008 is independent of the hardware and operating system; and
- a modemmed back channel 17 between the receiver/decoder 13 and the application and data server 4006 to enable signals instructing the server 4006 to insert data and applications into the MPEG-2 transport stream at the request of the end user.

The interactive television system operates using "applications" which control the functions of the receiver/decoder and various devices contained therein. Applications are represented in the engine 4008 as "resource files". A "module" is a set of resource files and data. A "memory volume" of the receiver/decoder is a storage space for modules. Modules may be downloaded into the receiver/decoder 13 from the MPEG-2 transport stream.

### Receiver/decoder

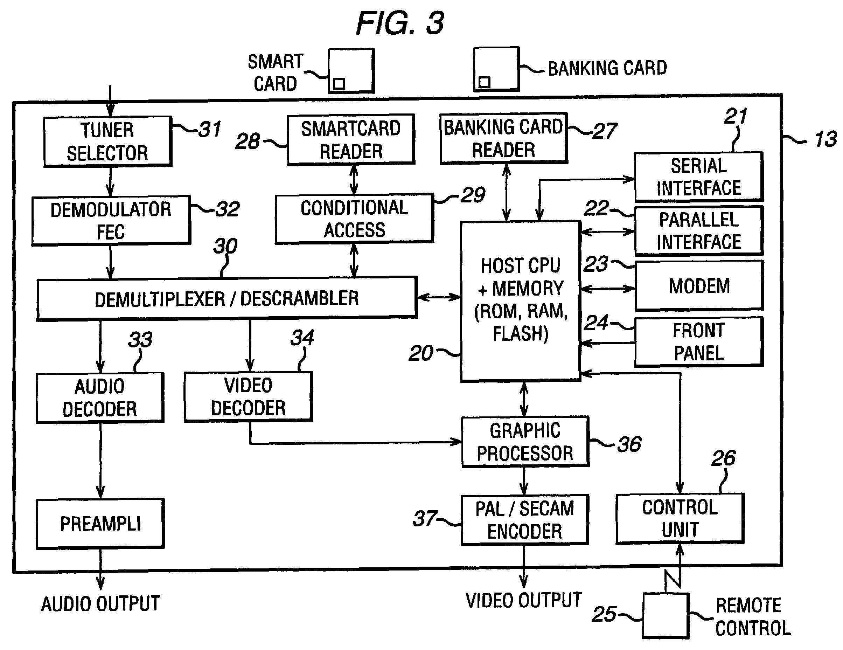

Referring to Figure 3, the elements of the receiver/decoder 13 or set-top box will now be described. The elements shown in this figure will be described in terms of functional blocks.

The receiver/decoder 13 comprises a central processor 20 including associated memory elements and adapted to receive input data from a serial interface 21, a parallel interface 22, a modem 23 (connected to the modem back channel 17 of Fig. 1), and switch contacts 24 on the front panel of the decoder.

The receiver/decoder is additionally adapted to receive inputs from an infra-red remote control 25 via a control unit 26 and also possesses two smartcard readers 27, 28 adapted to read bank or subscription smartcards 29, 30 respectively. The subscription smartcard reader 28 engages with an inserted subscription card 30 and with a conditional access unit 29 to supply the necessary control word to a demultiplexer/descrambler 30 to enable the encrypted broadcast signal to be descrambled. The decoder also includes a conventional tuner 31 and demodulator 32 to receive and demodulate the satellite transmission before being filtered and demultiplexed by the unit 30.

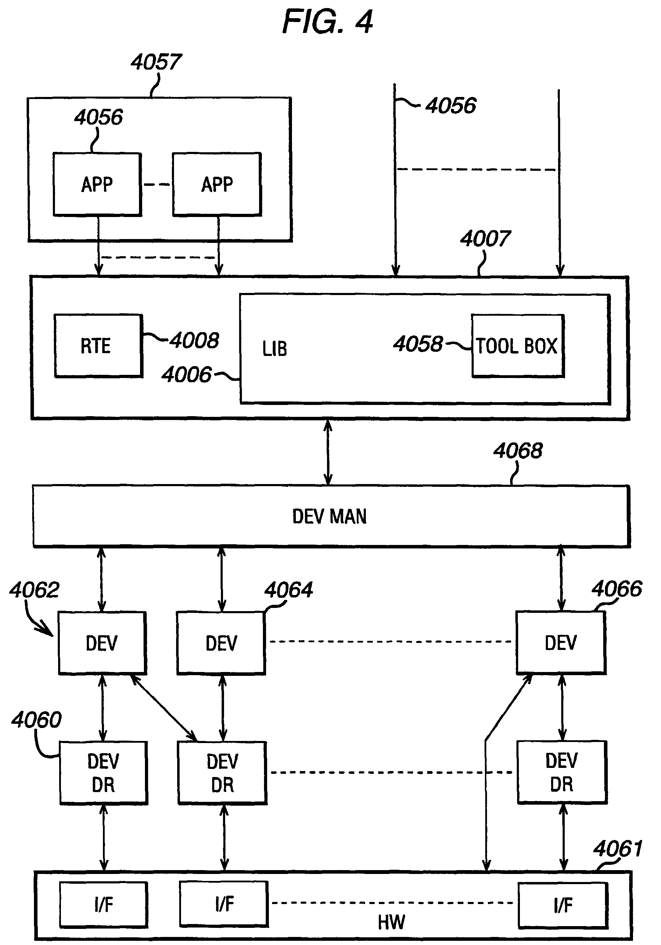

Processing of data within the receiver/decoder is generally handled by the central processor 20. Figure 4 illustrates the software architecture of the central processor 20 of the receiver/decoder. With reference to Figure 4, the software architecture comprises a Run-Time-Engine 4008, a Device Manager 4068 and a plurality of Devices 4062 and Device Drivers 4066 for running one or more applications 4056.

As used in this description, an application is preferably a piece of computer code for controlling high level functions of preferably the receiver/decoder 13. For example, when the end user positions the focus of remote control 25 on a button object seen on the screen of the television set 14 and presses a validation key, the instruction sequence associated with the button is run.

An interactive application proposes menus and executes commands at the request of the end user and provides data related to the purpose of the application. Applications may be either resident applications, that is, stored in the ROM (or FLASH or other non-volatile memory) of the receiver/decoder 13, or broadcast and downloaded into the RAM or FLASH memory of the receiver/decoder 13.

Applications are stored in memory locations in the receiver/decoder 13 and represented as resource files. The resource files may for example comprise graphic object description unit files, variables block unit files, instruction sequence files, application files and data files, as described in more detail in the above-mentioned patent specifications.

The receiver/decoder contains memory divided into a RAM volume, a FLASH volume and a ROM volume, but this physical organization is distinct from the logical organization. The memory may further be divided into memory volumes associated with the various interfaces. From one point of view, the memory can be regarded as part of the hardware; from another point of view, the memory can be regarded as supporting or containing the whole of the system shown apart from the hardware.

The central processor 20 can be regarded as centred on a run time engine 4008 forming part of a virtual machine 4007. This is coupled to applications on one side (the "high level" side), and, on the other side (the "low level" side), via various intermediate logical units discussed below, to the receiver/decoder hardware 4061, comprising the various ports as discussed above (that is, for example, the serial interface 21, the parallel interface 22, modem 23, and control unit 26).

With specific reference to Figure 4, various applications 4057 are coupled to the virtual machine 4007; some of the more commonly used applications may be more or less permanently resident in the system, as indicated at 4057, while others will be downloaded into the system, eg from the MPEG data stream or from other ports as required.

The virtual machine 4007 includes, in addition to the run time engine 4008, some resident library functions 4006 which include a toolbox 4058. The library contains miscellaneous functions in C language used by the engine 4008. These include data manipulation such as compression, expansion or comparison of data structures, line drawing, etc. The library 4006 also includes information about firmware in the receiver/decoder 13, such as hardware and software version numbers and available RAM space, and a function used when downloading a new device 4062. Functions can be downloaded into the library, being stored in FLASH or RAM memory.

The run time engine 4008 is coupled to a device manager 4068 which is coupled to a set of devices 4062 which are coupled to device drivers 4060 which are in turn coupled to the ports or interfaces. In broad terms, a device driver can be regarded as defining a logical interface, so that two different device drivers may be coupled to a common physical port. A device will normally be coupled to more than one device driver; if a device is coupled to a single device driver, the device will normally be designed to incorporate the full functionality required for communication, so that the need for a separate device driver is obviated. Certain devices may communicate among themselves.

Each function of the receiver/decoder 13 is represented as a device 4062 in the software architecture of the receiver/decoder 13. Devices can be either local or remote. Local devices 4064 include smartcards, SCART connector signals, modems, serial and parallel interfaces, a MPEG video and audio player and an MPEG section and table extractor. Remote devices 4066, executed in a remote location, differ from local devices in that a port and procedure must be defined by the system authority or designer, rather than by a device and device driver provided and designed by the receiver/decoder manufacturer.

The run time engine 4008 runs under the control of a microprocessor and a common application programming interface. They are installed in every receiver/decoder 13 so that all receiver/decoders 13 are identical from the application point of view.

The engine 4008 runs applications 4056 on the receiver/decoder 13. It executes interactive applications 4056 and receives events from outside the receiver/decoder 13, displays graphics and text, calls devices for services and uses functions of the library 4006 connected to the engine 4008 for specific computation.

The run time engine 4008 is an executable code installed in each receiver/decoder 13, and includes an interpreter for interpreting and running applications. The engine 4008 is adaptable to any operating system, including a single task operating system (such as MS-DOS). The engine 4008 is based on process sequencer units (which take various events such as a key press, to carry out various actions), and contains its own scheduler to manage event queues from the different hardware interfaces. It also handles the display of graphics and text. A process sequencer unit comprises a set of action-groups. Each event causes the process sequencer unit to move from its current action-group to another action-group in dependence on the character of the event, and to execute the actions of the new action-group.

The engine 4008 comprises a code loader to load and download applications 4056 into the receiver/decoder memory. Only the necessary code is loaded into the RAM or FLASH memory, in order to ensure optimal use. The downloaded data is verified by an authentication mechanism to prevent any modification of an application 4056 or the execution of any unauthorized application. The engine 4008 further comprises a decompressor. As the application code (a form of intermediate code) is compressed for space saving and fast downloading from the MPEG stream or via a built-in receiver/decoder mode, the code must be decompressed before loading it into the RAM. The engine 4008 also comprises an interpreter to interpret the application code to update various variable values and determine status changes, and an error checker.

### Authoring tool

As mentioned above, authoring tool 4004 is provided to enable applications to be designed, created, tested and debugged. The authoring tool is run on a workstation (WS), such as a personal computer (PC) running Windows NT, Windows 95 or Windows 98, or a UNIX machine, or a workstation running any other operating system. The authoring tool allows an application developer to design and create applications by editing them on the workstation screen.

According to a preferred embodiment, in order to test and debug applications, a receiver/decoder is provided which is linked to the workstation. The receiver/decoder is linked to the workstation in such a way that the various files which make up an application can be downloaded to the receiver/decoder as and when they are needed.

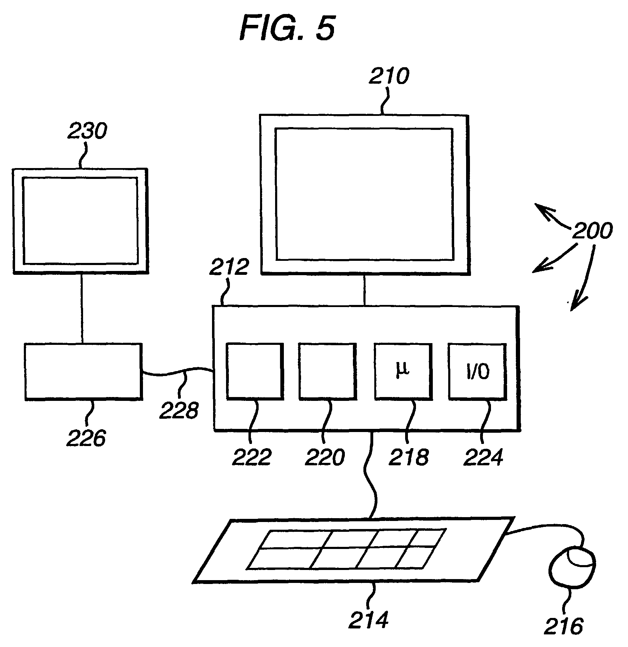

Referring to Figure 5, in overview the authoring tool comprises workstation 200 which is linked to receiver/decoder 226 by link 228. The workstation 200 comprises screen 210, computer 212, keyboard 214 and mouse 216. Computer 212 comprises a processor 218, memory 220, hard disk 222, input/output (I/O) ports 224, as well as other pieces of hardware and software that are conventional in such computers. Receiver/decoder 226 is connected to television 230, or other display.

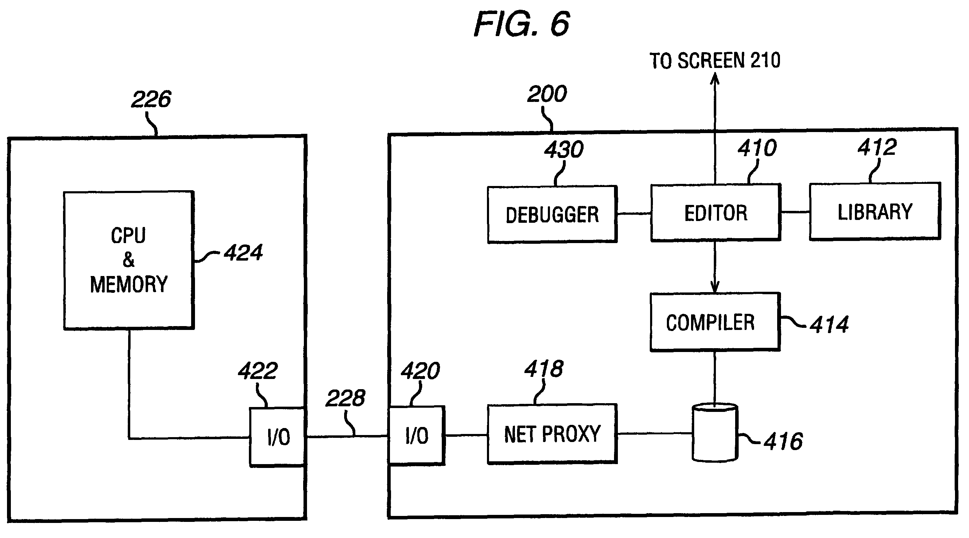

The various components of the authoring tool 4004 are shown in more detail in Figure 6. The authoring tool comprises an editor 410 for creating and editing the various files that make up an application, library 412 which stores existing files for use by the editor 410, and compiler 414 for compiling files which have been produced by editor 410 into the intermediate language which can be understood by a virtual machine, such as virtual machine 4007 in Figure 4. The compiled files, which are called "class files" are saved in directory 416, which is a directory on the hard disk 222 of the workstation 200 or in another volume on a network to which the workstation is connected. Receiver/decoder 226 comprises CPU 424 and associated memory, input/output (I/O) port 422, as well as other components found in conventional receiver/decoders, such as those shown in Figure 3. Net proxy 418 (as described later) is provided in the workstation to allow the receiver/decoder 226 to access class files stored in directory 416 via receiver/decoder I/O port 422, serial link 228, and workstation I/O port 420. Also provided is debugger 430 (as described later) for debugging applications running on receiver/decoder 226.

An application developer creates new files, and/or makes use of existing files which are stored in the library 412, to produce files for his application using the editor 410. An application comprises source files, which contain instructions written in comprehensive language, such as Java, designed for a virtual machine, and, optionally, data files, which contain data which is to be used by the application. Files which are being edited are displayed on the workstation screen 210 and changes are entered using keyboard 214 and mouse 216. The files may be displayed in various ways; for example graphic files may be displayed as graphics on the screen, whereas for resource files, the code in the files may be displayed, or a representation of the overall structure or architecture of the code may be displayed.

In a specific implementation, which uses a programming language known as Pantalk, an application may comprise one of more of the following types of resource files:
∘ source files - to define the entry points of the application
∘ panel files - to define the screens (these are graphical source files)
∘ class files - to define the data structures used by the application
∘ optionally, script files - to define the behaviour of the application

Examples of data files are as follows:
∘ icon library files - these contain a collection of, for example, 4 bits per pixel bitmaps. These icons can be used by the panels as buttons or as decoration.
∘ images - these files contain a single bitmap of any size with four bits per pixel, giving 256 colours. This type of image is typically used as a background to a panel.
∘ colour tables - these are used to define the colours which a module can display on the screen.
∘ user data files - these files are defined by the user for use by the application. They are ASCII text files or binary data files.

In alternative implementations other programming languages, such as Java, are used. As will be apparent to the skilled person, different languages may result in different application structures, appropriate to that language.

### Testing applications

Once an application has been created, it is converted into the intermediate language which can be understood by a virtual machine by compiler 414, and stored as class files in directory 416. The application may then be tested by running it on the processor 424 of receiver/decoder 226. In order to test an application, the workstation 200 sends a request to the receiver/decoder 226 in the form of a message containing the name of the server which is to be used for communication and the name of the directory in which the class files are stored.

In contrast to a conventional receiver/decoder, the receiver/decoder 226 of the present embodiment is programmed such that, when it is first turned on, it runs a resident program called network file system (NFS) loader. This program waits for a request to be received from the workstation 200. When the program receives a request, it accesses the directory specified in the request, using the specified port. The directory 416 contains a file called startup.txt which contains the name of the boot file, that is, the file which initiates the application. The NFS loader reads the name of the boot file and then downloads that file from the workstation directory and stores it in memory in the receiver/decoder. The boot file is then run by the processor 424 in the receiver/decoder.

The boot file may contain calls to routines which are contained in other files, in which case the required file needs to be loaded into the processor. In this case, the processor first looks in the receiver/decoder memory to see if the file that it needs is stored locally, for example, because it has already been used. If the file is not stored locally, then the processor looks in the workstation directory, specified in the request from the workstation, to find the file. The file is then downloaded and stored in the receiver/decoder memory (for example RAM or FLASH memory) for use by the receiver/decoder. In this way, applications which have been created by the editor 410 and stored in directory 416, are run on the receiver/decoder 226. The output from receiver/decoder 226 is displayed on television set 230. This allows the application developer to see how the application looks when run on a receiver/decoder and television.

Referring to Figure 7, the various steps in creating and testing an application will be described. In step 450 an application is created using the editor 410. In step 452 the application is compiled, and in step 454 the compiled application is saved in directory 416 as class files. In step 456 a request is sent from the workstation to the receiver/decoder, specifying the name of the directory and the port to be used for communication. In step 458 the boot file is loaded from the directory into the receiver/decoder and in step 460 the boot file is run on the processor of the receiver/decoder. In step 462, it is decided by the processor whether or not a new class file is required. If a new class file is required, then in step 464 that new class file is loaded into the receiver/decoder and in step 466 the new class file is run. Further class files are loaded into the receiver/decoder and run by the processor as required.

The editor 410 may be used to make changes to the application, for example as a result of the testing. As a result of such changes, some or all of the files stored in the directory 416 may be updated. The updated files may then be transferred to the receiver/decoder 226 in one of several ways, as-will now be described.

In one embodiment, no special provision is made for updating files in the receiver/decoder 226. When the receiver/decoder is turned on, it simply downloads the files that it requires from the directory 416. In this case, if changes have been made to files that have already been downloaded into the receiver/decoder, then the receiver/decoder must be restarted, so that the updated files will be downloaded. This may be done, for example, by switching the receiver/decoder off and then on again. The receiver/decoder then downloads all files, including any modified files, that are needed to run the application.

In another embodiment, files in the receiver/decoder are updated by sending an "unload file" command from the workstation to the receiver/decoder. When the receiver/decoder receives this command, it deletes the specified files. The next time that the file is required, it will not be present locally in the receiver/decoder, and so the updated version of the file will be downloaded from the directory 416.

In a further embodiment, the receiver/decoder checks the time and date of last modification of all files that are available to it both locally and in the workstation, and uses the latest version of all files. In this way, modified files are transferred automatically to the receiver/decoder.

### Authoring tool network

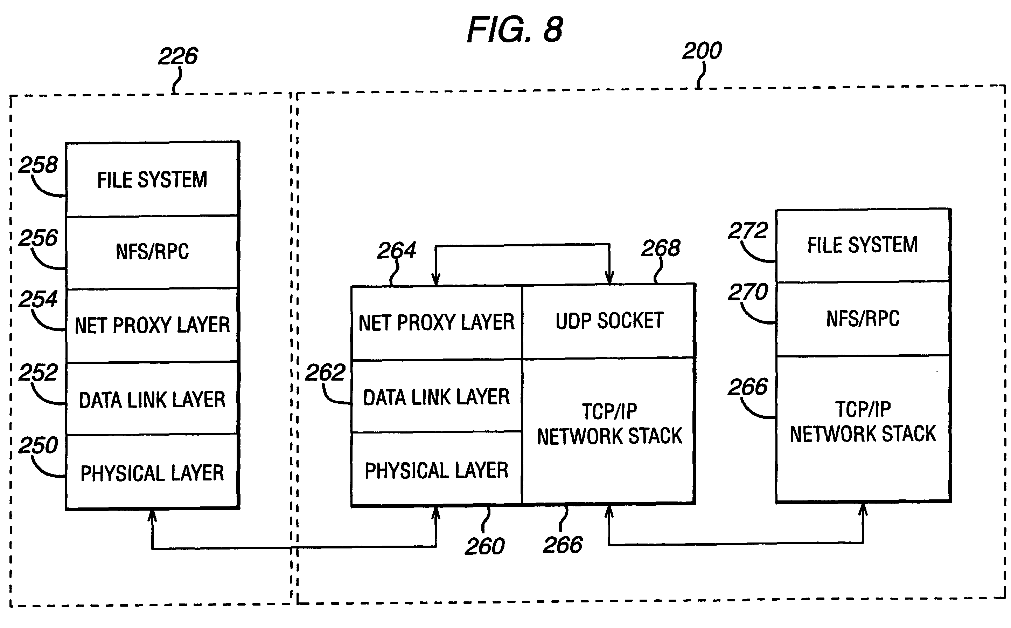

Figure 8 illustrates the architecture of the various layers that are used to give the receiver/decoder 226 access to the workstation's hard disk, or the network volume, as the case may be, containing the directory 416. The receiver/decoder is provided with a client network file system (NFS) which permits the receiver/decoder to use the workstation's hard disk or a directory on a network volume as if it were a local storage device. In the present example, the receiver/decoder does not have a network stack, and so a proxy stack ("NetProxy") 418 is provided on the workstation for use by the receiver/decoder. This proxy establishes a link between the workstation's network stack and the physical port which is connected to the receiver/decoder.

Referring to Figure 8, the receiver/decoder 226 includes a physical layer 250, a data link layer 252, a net proxy layer 254, a NFS/RPC layer 256 and a file system layer 258.

The physical layer 250 provides the physical port between the receiver/decoder 226 and the workstation 200. As such, it may include (amongst other possibilities) any or all of a serial port, a parallel port or a modem.

The purpose of the data link layer 252 is to handle exchange of frames of data between the physical layer 250 and the net proxy layer 254. It serves to ensure the integrity of the frames which are exchanged, and to demultiplex frames arriving from different destinations.

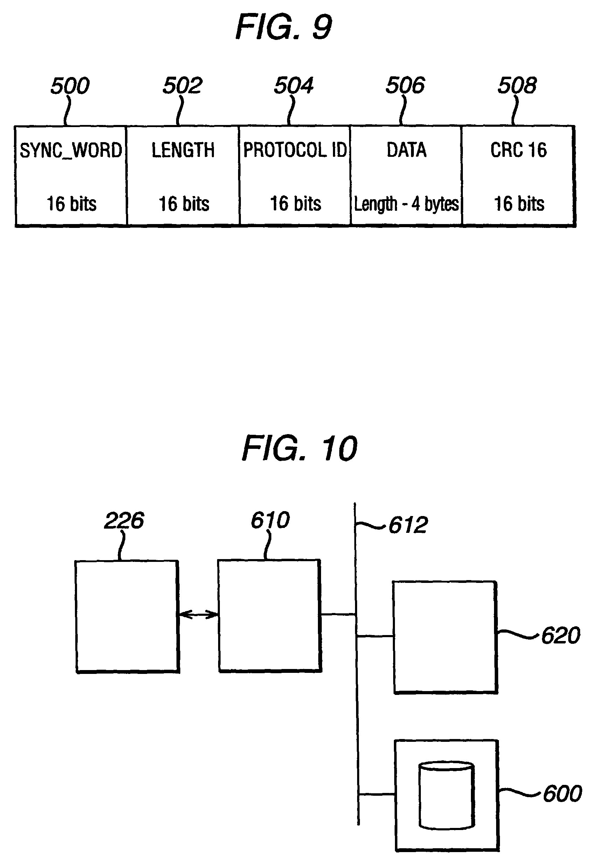

The data link layer 252 may use a protocol identified as SLPD. SLPD protocol handles data in frames which include five fields, represented diagrammatically in Figure 9. The fields contained within this frame as follows:
- SYNC_WORD (500): a fixed 16-bit value that identifies the start of a SLPD frame.
- LENGTH (502): a 16-bit value being the count of bytes to follow in the SLPD frame.
- PROTOCOL_ID (504): a 16-bit value that identifies the protocol of the data contained within the SLPD frame. This field is used in multiplexing of data.
- DATA (506): A variable-length field containing LENGTH - 4 bytes of data transported by the SLPD frame.
- CRC 16 (508): A 16-bit field containing data to verify the integrity of the SLPD frame. The field contains a 16-bit cyclic redundancy checking value calculated on the fields PROTOCOL_ID and DATA.

The functionality of the data link layer 252 includes provision of the following public methods:

*MhwNFSRpcComRegisterProtocol*: This function registers callback functions associated with a protocol. Two callback functions, *aSendCallback* and *aRevCallback*, are associated with each protocol, and are respectively, called to indicate completion of the transmission of a frame of data and the other to indicate reception of a frame of data.

*MhwNFSRpcComUnregisterProtocol*: This function is used to delete callback functions associated with a protocol.

*MhwNFSRpcComPortInit, MhwNFSRpcComPortClose*: Used, respectively, to initialise and to close a communication port (such as a serial port, a parallel port, or a modem device) and to obtain a context address of the port. In a preferred embodiment, it is permitted to call this function several times for the same device. Initialisation of the device is not effected other than on the first call. The data link layer 252 stores in a counter the number of calls made to *MhwNFSRpcComPortInit* for each device. Each time a subsequent call is made to *MhwNFSRpcComPortClose* for a device, the counter for that device is decremented. The port is not actually closed until its counter reaches zero.

*MhwNFSRpcComInit*, *MhwNFSRpcComClose*: These functions are called, respectively, to initialise and to correctly close down the data link layer 252.

*MhwNFSRpcComDatagramSend*: This function transmits a SLPD frame *via* a communication port. On completion of transmission, the callback function *aSendCallback* for the protocol identified in the SLPD frame is called to indicate to the client that the frame has been sent.

The net proxy layer 254 is a software layer which compensates for the absence of a network stack in the decoder. The net proxy 254 layer communicates with a net proxy layer 264 in the workstation 200 through intermediate data link layers 252,262 and physical layers 250,260 in the receiver/decoder 226 and the workstation 200. Within the workstation 200, all messages received by the net proxy layer 264 are passed to a network stack 266 for onward transmission to a remote host via a UDP socket 268; similarly all messages received by the UDP socket 268 are transferred to receiver/decoder 226. NFS/RPC layer 256 in the receiver/decoder provides the interface between the file system 258 of the receiver/decoder and the NetProxy layer, while NFS/RPC layer 270 in the workstation provides the interface between the workstation's file system and the network stack.

The net proxy layer (whether in the receiver/decoder 226 or in the workstation 200) handles data packets which contain a host name and a data packet of arbitrary length. The net proxy layer provides the following public methods:

*NFSRpcProxyInit*, *NFSRpcProxyClose*: These functions respectively initialise and close down the net proxy layer.

*NFSRpcProxyBindHostName*, *NFSRpcProxyUnbindHostName*: The first of these functions associates a host name with a physical interface. The latter deletes a previously-registered host name from the list of hosts maintained by the net proxy.

NFSRpcProxyBindResolveName: This function obtains the address of a host identified by name.

*NFSRpcProxyRpcSend*: This function is used to make an RPC call on a remote host.

The NFS/RPC layer implements the functionality necessary to invoke RPC commands in conformity with RFC1057, RFC1094 and relevant ISO standards.

A modified embodiment is shown in Figure 10. In this embodiment, the directory 416 is stored in network volume on an NFS server 600 remote from the workstation 200. A developer working on a development workstation 620 can gain access to the files in the directory 416 *via* a network 612 connection to the server 600. A net proxy 610 separate from the developer's workstation 620 is provided in order that the receiver/decoder 226 can gain access to the network.

In the arrangement of Figure 10, the receiver/decoder is configured as described above with reference to the preceding figures. The net proxy 610 can conveniently be implemented as software executing on hardware such as a PC workstation. Typically, the development workstation is a more powerful development machine, such as a Unix workstation. It will be understood that the execution environment of the receiver/decoder 226 can, through the net proxy 610, access files on a number of directories in various volumes connected to the network 612, including the developer's workstation 620, a common file server 600, and other local or remote developer's workstations (not shown).

### Debugger

Referring again to Figure 6, the workstation 200 includes a debugging tool 430 in the form of software which monitors and controls execution of code in the runtime execution environment of the receiver/decoder 226. As was disclosed in International Patent Application number WO 98/43165 cited above, a debugger running on a development workstation can exchange control messages with an execution environment of a receiver/decoder 226 to control and/or to monitor execution of a program executing in the execution environment.

In the present embodiment, in order that the debugger can control operation of an application running on receiver/decoder 226, control messages are carried between the network and the receiver/decoder 226 by way of net proxy 418 or 610. On initiation of a remote debugging session, the debugger 430 is invoked with the host name of the remote host as an invocation parameter. This causes a data packet to be sent to the specified remote host, and thence via the net proxy 418 or 610 to the receiver/decoder 226. The data packet contains a command signal for the execution environment which instructs it to enter debugging mode, and further contains the name of a host to and from which debugging control signals are to be sent (normally, the host name of the developer's workstation). During debugging operation, the execution environment will then send and receive control signals through the net proxy of the receiver/decoder and through a local communication port.

During debugging operation, an application running on the receiver/decoder is monitored and controlled in accordance with commands sent to the debugger. Class files forming the application are downloaded to the receiver/decoder as they are needed, in the same way as described above in relation to testing operations. Updated files may also be transferred to the receiver/decoder in any of the ways described in relation to testing operations.

Various debugging operations may be carried out by debugger 430. For example, the debugger 430 can monitor variables in the- application, a list of variables to be monitored being defined for this purpose. The values of the defined variables can be displayed at defined points in the execution of the application, and/or the values of variables can be displayed (along with the variable names) on any change of value. Further, the debugger 430 can be used to modify variable values in the receiver/decoder; this gives the operator the ability to see almost immediately what the effect of setting variables to different values will have. These variable control functions can, of course, also be cleared by the debugger (as all debugger functions can be cleared).

Similarly, the debugger 430 can set the receiver/decoder to signal when other types of entity, such as modules, variables block unit files, and objects, are encountered during the running of the application.

The debugger 430 can also control the execution of the application, by inserting break-points (and deleting them). More specifically, execution may be allowed to run without interruption, to run to a break-point and stop, to run to a break-point and step on (restart) when desired, to run to a subroutine call or return from a subroutine, or to proceed step by step (ie stepping on from each statement only in response to the operator), either between defined points and/or defined sub-routines or for the full application. (A sub-routine may be an instruction sequence, which is a sequence of statements which can be called or executed by the application.)

The debugger 430 can operate a trace function, which detects and signals one or more of a variety of operations such as continuing, loading, returning or jumping to, starting or ending the execution of, or interrupting one or more specified routines or types thereof.

The debugger 430 can also monitor and report the status of the receiver/decoder and the application at desired points in the execution of the application. Among the elements whose status can be so monitored and reported are the following: memory size, free memory, buffer pool characteristics, system version number, and so on; the memory contents (memory dump) of the whole memory or specified parts thereof (eg RAM, Flash, and ROM); volumes mounted, modules loaded (and current module), and variables block unit files (number, memory used, list of variables block unit files); instruction sequence status (number, number running and/or interrupted, memory used, etc); and return stack contents (ie a list of subroutines to be returned to).

Examples of debugger functions which are available in a preferred embodiment are shown in the following table.

| **Command** | **Description** |
|---|---|
| next | execution of a line of code without following its functions |
| step | execution of a line of code following its functions |
| cont | continue execution until a stop point or the end of the program |
| until 〈line number〉 | continue execution until the specified line number |
| finish | continue execution until the end of the current function |
| break 〈string〉 | insert a break point |
| break 〈string if 〈condition〉 | insert a conditional break point |
| breakcount 〈number〉 〈string〉 | insert a break point with a counter (the program will stop after break point has been passed a specified number of times) |
| breakcount 〈number〉 〈string〉 if 〈condition〉 | insert a conditional break point with counter |
| delete 〈breakpoint number〉 | delete break point |
| disable 〈breakpoint number〉 | deactivate a break point |
| enable 〈breakpoint number〉 | activate a break point |
| command 〈breakpoint number〉 | associate a command with a break point |
| watchexception 〈exception〉 | insert a break point when an exception is raised |
| unwatchexception 〈watchexeception number〉 | suppress a break point associated with an exception |
| info | display list and status of break points |
| print 〈expression〉 | print the value of an expression |
| set 〈expression1〉 〈expression2〉 | set the value of expression 2 to expression 1 |
| whatis 〈expression〉 | indicate the type of the expression |
| inherit 〈expression〉 | display list of mother classes of the expression |
| fields 〈expression〉 | display list of fields of an expression |
| methods 〈expression〉 | display list of methods of an expression |
| dump 〈format〉 〈address〉〈count〉 | display the contents of a section of memory |
| where | display the stack of current thread |
| up | select the frame calling the current frame |
| down | select the called frame |
| threads | display a list of threads and their main attributes |
| getthr | display a detailed list of the attributes of a thread |
| monitors | display list of monitors of threads |
| getmon | display detailed list of attributes of a monitor |
| dbginfo | lists modules for which a trace level is defined |
| dbgset | modify the trace level of a module |
| fs 〈action〉\|parameters\| | used to obtain information from the file system |

In some circumstances, it may be desirable for more than one host to be in communication with the receiver/decoder 226. For example, the execution environment may be configured to send debugging information in real time to a network printer.

In an alternative embodiment, the receiver/decoder 226 is provided with a network stack, and the NetProxy layers described above are dispensed with.

A workstation and receiver/decoder have been described above with reference to an authoring tool; however the receiver/decoder and workstation may also be used for other purposes, such as for demonstrating applications.

The device simulator described in co-pending European Patent Application Number 99401744.0 in the name of the present applicant may be used in conjunction with the present invention. The subject matter of that patent application is incorporated herein by reference.

It will be understood that the present invention has been described above purely by way of example, and modifications of detail can be made within the scope of the invention.

Each feature disclosed in the description, and (where appropriate) the claims and drawings may be provided independently or in any appropriate combination.

Reference numerals appearing in the claims are by way of illustration only and shall have no limiting effect on the scope of the claims.

## Claims

1. A receiver/decoder operable in a debugging mode for debugging an application, comprising means for communicating a debugging message over a network.

2. A receiver/decoder according to claim 1 wherein the means for communicating a debugging message is adapted to receive the debugging message from the network, preferably to control the execution of the application in dependence on the message.

3. A receiver/decoder according to claim 2 wherein the debugging mode is invoked by the debugging message, which message includes an identifier of a remote host, and the means for communicating a debugging message is adapted to communicate a further debugging message with the remote host identified in the message.

4. A receiver/decoder according to claim 1, 2 or 3 wherein the means for communicating the debugging message is adapted to transmit a debugging message to the network, the message preferably containing information concerning execution of the application.

5. A workstation adapted to debug an application running on a receiver/decoder, comprising means for communicating a debugging message with the receiver/decoder over a network.

6. An application development tool comprising a receiver/decoder according to any of claims 1 to 4 and a workstation according to claim 5.

7. An application development tool according to claim 6 including a net proxy operative to implement communication between the receiver/decoder the workstation.

8. An application development environment comprising an application development tool according to claim 6 or 7 and a network over which the workstation and the receiver/decoder communicate.

9. A method of debugging an application on a receiver/decoder comprising operating the receiver/decoder in a debugging mode and communicating a debugging message over a network.

10. A receiver/decoder preferably according to any of claims 1 to 4 comprising means for running an application, the application comprising a plurality of files, and means for selectively reading at least one of the files from the network.

11. A workstation preferably according to claim 5 comprising storage means storing an application to be run on a receiver/decoder, the application comprising a plurality of files, and means for allowing access to at least one of the files by a receiver/decoder connected to the workstation by a network.

12. An application development tool preferably according to claim 6 or 7 comprising a workstation for editing an application and a receiver/decoder for running the application, wherein the receiver/decoder has means for selectively reading a part of the application from a network file store and the workstation has means for initiating communication of the part to the receiver/decoder.

13. A method of running an application on a receiver/decoder, the application comprising a boot file and at least one further file, comprising:
transferring a boot file to the receiver/decoder;
executing the boot file in the receiver/decoder; and
transferring the at least one further file when it is required,
at least one of the boot file or the at least one further file being transferred over a network.

14. A method according to claim 13 in which at least one of the boot file and the at least one other file is transferred from a network file store.
